# EUROPÄISCHE PATENTANMELDUNG

(11) **EP 1 407 697 A1**
(43) Veröffentlichungstag der Anmeldung: **14.04.2004**
(21) Anmeldenummer: 03023116.1
(22) Anmeldetag: 10.10.2003
(51) Int. Cl.: A47J 27/21, H02G 11/02

(54) **Sockel für ein Haushaltsgerät**

(30) Priorität: 10.10.2002 DE 10247193
(71) Anmelder: BSH Bosch und Siemens Hausgeräte GmbH, 81739 München (DE)
(72) Erfinder: Fritz, Jürgen, 83358 Seebruck (DE); Magg, Johannes, 83368 St. Georgen (DE); Obermaier, Markus, 83365 Nussdorf (DE); Obermeier, Michael, 83278 Traunstein (DE)

(57) **Zusammenfassung**

Die Erfindung betrifft einen Sockel (1) für ein Haushaltsgerät, insbesondere einen Wasserkocher (2), der aus einem Sockeloberteil (4), an welchem ein Sockelunterteil (5) drehbar angeordnet ist, besteht. Das Sockelunterteil (5) weist einen Wickelkern (8) auf, um welchen ein Kabel (9) aufrollbar angeordnet ist, sowie eine elektrische Kontakteinheit (7) für das Haushaltsgerät, welche mit dem Kabel (9) verbunden ist. Die Erfindung zeichnet sich dadurch aus, dass das Sockeloberteil (4) als Standeinrichtung für den Sockel (1) ausgebildet ist, in welchem das Sockelunterteil (5) frei drehbar aufgehängt ist.

## Beschreibung

Die Erfindung betrifft einen Sockel für ein Haushaltsgerät, insbesondere einen Wasserkocher, gemäß dem Oberbegriff des Patentanspruchs 1.

Als Kabelunterbringung weisen bekannte Wasserkocher mit einem Sockel und einem abnehmbaren Aufsatz innerhalb des Sockels meist eine Aussparung auf, in der ein Kabel um einen starr am Sockel befestigten Wickelkern aufgewickelt werden kann. Das Aufwickeln des Kabels wird dadurch umständlich und mühsam, da es mit der Hand in den vorgesehenen Raum eingelegt werden muss. Die Fixierung des Kabels erfolgt über eine bzw. mehrere Austrittsöffnungen, welche U-förmig und nach unten offen gestaltet sind, um das Kabel einzuklemmen. Dadurch ist eine Abwicklung des Kabels mit anschließender Längenfixierung nur in großen Abstufungen möglich, auch fällt das Kabel beim Anheben des Sockels meist nach unten heraus.

Vom Wasserkocher "JK820 Series" der Firma "Kenwood LTD, UK" ist weiterhin ein Sockel bekannt, der aus einem Sockeloberteil sowie einem am Sockeloberteil drehbar befestigten Sockelunterteil, welches einen Wickelkern aufweist, besteht. Ein um den Wickelkern angeordnetes Kabel kann zwar bei diesem Sockel stufenlos herausgezogen werden; da das Sockelunterteil jedoch gleichzeitig als Standeinrichtung des Sockels fungiert, ist dies nicht möglich, wenn der Sockel auf einer Stellfläche steht.

Die Aufgabe der vorliegenden Erfindung besteht darin, einen verbesserten Sockel für ein Haushaltsgerät mit einer höheren Bedienungsfreundlichkeit bereitzustellen.

Die Aufgabe der Erfindung wird durch die Merkmale des Anspruchs 1 gelöst. Vorteilhafte Ausführungsformen sind in den abhängigen Ansprüchen angegeben.

Der erfindungsgemäße Sockel umfasst ein Sockeloberteil, welches als Standeinrichtung für den Sockel ausgebildet ist, und ein Sockelunterteil, welches einen Wickelkern aufweist, um den ein Kabel gerollt werden kann und welches frei drehbar am Sockeloberteil aufgehängt ist. Dieser Sockel zeichnet sich nicht nur durch einen einfachen, kostengünstigen Aufbau aus. Er gestattet es zudem, die ausgezogene Kabellänge stufenlos einzustellen und das Kabel herauszuziehen, wenn der Sockel auf einer Stellfläche steht.

In einer bevorzugten Ausführungsform weist das Sockeloberteil einen oder mehrere Standfüße auf, die aus einem haftvermittelnden Material, vorzugsweise Gummi, bestehen. Hierdurch wird das Herausziehen des Kabels weiter erleichtert, da ein Wegrutschen des Sockels verhindert wird.

In einer weiteren bevorzugten Ausführungsform sind an der Unterseite des Sockelunterteils ein bzw. mehrere Griffelemente, vorzugsweise Griffmulden vorgesehen. Diese Ausgestaltung erleichtert das Verdrehen des Sockelunterteils gegenüber dem Sockeloberteil beim Aufrollen des Kabels.

Gemäß einer weiteren bevorzugten Ausführungsform ist die Oberseite des Sockelunterteils mit einem bzw. mehreren Griffelementen versehen. Hierdurch lässt sich das Kabel bequem bei feststehendem Sockel aufrollen.

Bevorzugt ist es weiterhin, dass das Sockeloberteil ein Führungselement für das Kabel, vorzugsweise eine rundum geschlossene Austrittsöffnung, aufweist, aus welcher das Kabel austritt. Diese Ausführung erleichtert das Aufrollen des Kabels, da das Kabel während des Aufrollvorgangs dem Wickelkern in einer fest vorgegebenen Position zugeführt wird.

Die Erfindung wird im folgenden anhand der Figuren näher erläutert. Es zeigen:
Figur 1 eine Schnittdarstellung eines erfindungsgemäßen Sockels in Seitenansicht,
Figur 2 eine schematische Darstellung eines Wasserkochers bestehend aus dem erfindungsgemäßen Sockel und einem abnehmbaren Aufsatz,
Figur 3 eine Darstellung des erfindungsgemäßen Sockels von unten und
Figur 4 eine Draufsicht auf den erfindungsgemäßen Sockel.

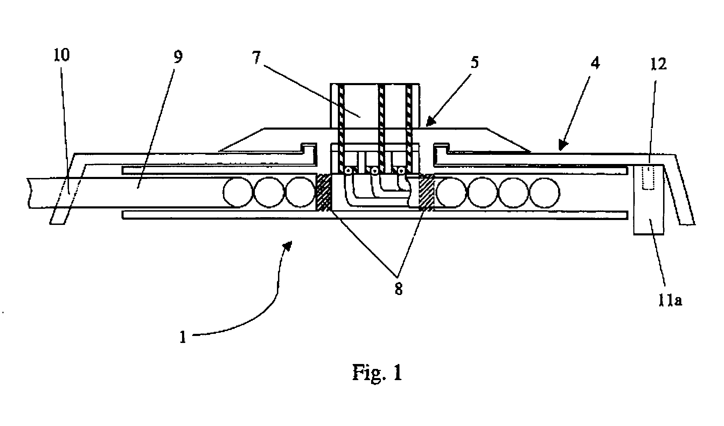

Figur 1 zeigt eine Schnittdarstellung in Seitenansicht eines erfindungsgemäßen Sockels 1, der aus einem Sockeloberteil 4 sowie einem am Sockeloberteil 4 drehbar aufgehängten Sockelunterteil 5 besteht. Das Sockeloberteil 4 ist als Standeinrichtung für den Sockel 1 ausgebildet und weist drei Standfüße 11a, 11b, 11c auf. Aus Gründen der Übersichtlichkeit ist in der gezeigten Figur nur ein Standfuß 11a dargestellt. Dieser Standfuß 11a ist als zylinderförmiges Formteil aus einem haftvermittelnden Material, vorzugsweise Gummi, ausgebildet und auf einen Stift 12 des Sockeloberteils 4 gesteckt. Natürlich besteht die Möglichkeit, einen Standfuß auf andere Art und Weise, beispielsweise durch Verwendung eines Klebemittels am Sockeloberteil zu befestigen.

Das Sockelunterteil 5 weist einen Wickelkern 8 mit einer elektrischen Kontakteinheit 7 für einen abnehmbaren Aufsatz eines Wasserkochers auf. Ein Kabel 9, welches aufgerollt um den Wickelkern 8 angeordnet ist, ist mit seinem einen Ende an die elektrische Kontakteinheit 7 des Sockelunterteils 5 angeschlossen. Durch Herausziehen des Kabels 9 aus dem Sockel 1 und damit einhergehendes Abrollen des Kabels 9 vom Wickelkern 8 lässt sich das Kabel 9 auf eine beliebige Länge stufenlos einstellen. Zusätzlich kann die Gesamtanordnung mit einer in dieser Figur nicht dargestellten Rasteinheit ausgestattet werden, um das Sockelunterteil 5 in vielen Positionen zu fixieren. Bedingt durch den Aufbau des Sockels 1 dreht sich das Sockelunterteil 5 und damit die Kontakteinheit 7 bei den Rollvorgängen mit. Mit dieser Konfiguration kann so auf die sonst aufwendigen und kostspieligen Schleifkontakte bei einer nichtbeweglichen Kontakteinheit verzichtet werden.

Zur Erleichterung des Ab- als auch des Aufrollens des Kabels ist ein Führungselement 10 am Sockeloberteil 4 vorgesehen. In der vorliegenden Ausführungsform ist dieses als rundum geschlossene Austrittsöffnung ausgebildet, welche das Kabel 9 während der Rollvorgänge dem Wickelkern 8 in einer festgehaltenen Position zuführt.

Neben der beschriebenen Ausführungsform mit drei Standfüßen 11a bis 11c sind selbstverständlich Varianten mit einer anderen Anzahl an Füßen möglich. Ferner sind auch Ausführungsformen vorstellbar, in denen das Sockeloberteil einstückig ausgebildet ist.

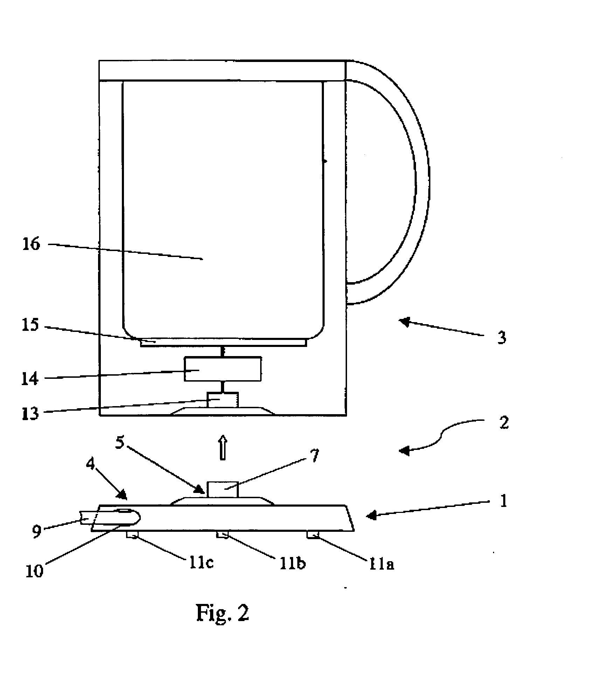

Figur 2 zeigt eine schematische Darstellung eines Wasserkochers 2, der aus dem in Figur 1 gezeigten erfindungsgemäßen Sockel 1 sowie einem abnehmbaren Aufsatz 3, welcher zentrisch auf den Sockel 1 aufgesetzt werden kann, besteht. Die Unterseite des Aufsatzes 3 weist eine Buchse 13 auf, welche an eine Steuervorrichtung 14 angeschlossen ist. Die Steuervorrichtung 14 ist elektrisch mit einer Heizplatte 15 verbunden, welche sich unterhalb eines Flüssigkeitsbehälters 16 des Aufsatzes 3 befindet und regelt das An- bzw. Abschalten der Heizplatte 15 und damit den Heizvorgang des Wasserkochers 2. Zu dessen Betrieb wird der Aufsatz 3 auf den Sockel 1 aufgesetzt, so dass ein elektrischer Kontakt zwischen Buchse 13 und Kontakteinheit 7 geschlossen wird.

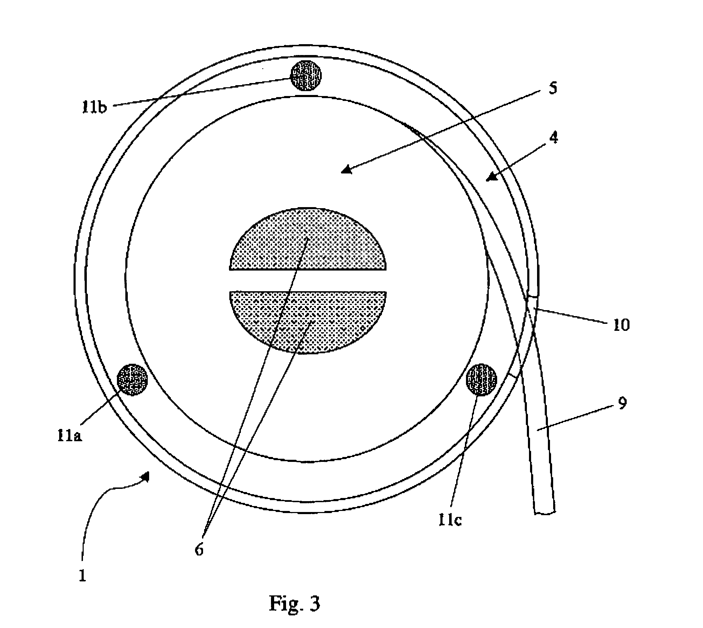

Figur 3 zeigt eine Darstellung des erfindungsgemäßen Sockels 1 von unten. Um das Aufrollen des Kabels 9 zu erleichtern, ist es günstig, die Unterseite des Sockelunterteils 5 als Griffelement 6 auszubilden. Bei dem dargestellten erfindungsgemäßen Sockel 1 ist das Griffelement 6 durch zwei Griffmulden, welche durch einen Steg voneinander getrennt sind, ausgestaltet.

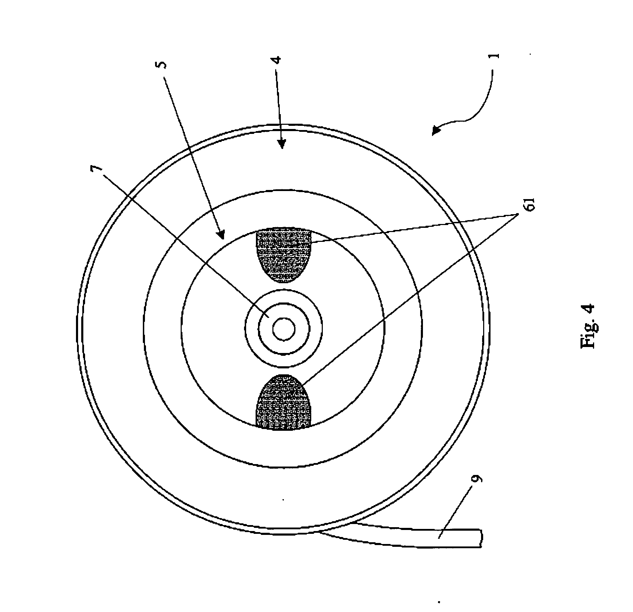

Figur 4 zeigt eine Draufsicht auf den erfindungsgemäßen Sockel 1, bei dem alternativ zu der in Figur 3 gezeigten Ausführungsform die Oberseite des Sockelunterteils 5 als Griffelement 61, in der vorliegenden Ausführungsform durch zwei Griffmulden gekennzeichnet, ausgebildet ist. Hierdurch ist die Möglichkeit gegeben, das Kabel 9 auch bei stehendem Sockel 1 aufzurollen. Weiterhin ist es vorstellbar, die Kontakteinheit selbst als Griffelement auszubilden. Dies erfordert natürlich, dass die Buchse des Aufsatzes an die Form der Kontakteinheit angepasst wird.

### Bezugszeichenliste

- 1: Sockel
- 2: Wasserkocher
- 3: Aufsatz
- 4: Sockeloberteil
- 5: Sockelunterteil
- 6, 61: Griffelement
- 7: Kontakteinheit
- 8: Wickelkern
- 9: Kabel
- 10: Führungselement
- 11a - 11c: Standfuß
- 12: Stift
- 13: Buchse
- 14: Steuervorrichtung
- 15: Heizplatte
- 16: Flüssigkeitsbehälter

## Patentansprüche

1. Sockel (1) für ein Haushaltsgerät, insbesondere einen Wasserkocher (2), mit einem Sockeloberteil (4), an welchem ein Sockelunterteil (5) drehbar angeordnet ist, wobei das Sockelunterteil (5) einen Wickelkern (8) mit einer elektrischen Kontakteinheit (7) für das Haushaltsgerät aufweist, und mit einem Kabel (9), welches aufrollbar um den Wickelkern (8) des Sockelunterteils (5) angeordnet und elektrisch mit der Kontakteinheit (7) verbunden ist,
**dadurch gekennzeichnet,**
**dass** das Sockeloberteil (4) als Standeinrichtung für den Sockel (1) ausgebildet ist, wobei das Sockelunterteil (5) frei drehbar am Sockeloberteil (4) aufgehängt ist.

2. Sockel nach Anspruch 1, **dadurch gekennzeichnet, dass** das Sockeloberteil (4) einstückig ausgebildet ist.

3. Sockel nach Anspruch 1, **dadurch gekennzeichnet, dass** das Sockeloberteil (4) einen bzw. mehrere Standfüße (11a, 11b, 11c) aufweist.

4. Sockel nach Anspruch 3, **dadurch gekennzeichnet, dass** das Sockeloberteil (4) an der Standfläche ein haftvermittelndes Material, vorzugsweise Gummi, aufweist.

5. Sockel nach einem der vorhergehenden Ansprüche, **dadurch gekennzeichnet, dass** an der Unterseite des Sockelunterteils (5) ein bzw. mehrere Griffelemente (6), vorzugsweise Griffmulden angeordnet sind.

6. Sockel nach einem der vorhergehenden Ansprüche, **dadurch gekennzeichnet, dass** an der Oberseite des Sockelunterteils (5) ein bzw. mehrere Griffelemente (61) angeordnet sind.

7. Sockel nach Anspruch 6, **dadurch gekennzeichnet, dass** die Kontakteinheit weiterhin als Griffelement ausgebildet ist.

8. Sockel nach einem der vorhergehenden Ansprüche, **dadurch gekennzeichnet, dass** das Sockeloberteil (4) ein Führungselement (10) für das Kabel (9), vorzugsweise eine rundum geschlossene Austrittsöffnung, aufweist.

9. Wasserkocher mit einem Sockel gemäß einem der vorhergehenden Ansprüche und einem Aufsatz (3), welcher zentrisch auf den Sockel (1) aufgesetzt werden kann.
